(19) Europäisches Patentamt
European Patent Office
Office européen des brevets

(11) Veröffentlichungsnummer: **0 159 643**
**B1**

(12) # EUROPÄISCHE PATENTSCHRIFT

(45) Veröffentlichungstag der Patentschrift: **12.07.89**

(51) Int. Cl.[4]: **C 08 F 8/00**

(21) Anmeldenummer: **85104528.6**

(22) Anmeldetag: **15.04.85**

(54) **Verfahren zur Herstellung von Hydroxylgruppen aufweisenden Alkoxylierungsprodukten von organischen Carbonsäuren.**

(30) Priorität: **26.04.84 DE 3415531**

(43) Veröffentlichungstag der Anmeldung: **30.10.85 Patentblatt 85/44**

(45) Bekanntmachung des Hinweises auf die Patenterteilung: **12.07.89 Patentblatt 89/28**

(84) Benannte Vertragsstaaten: **AT BE CH DE FR GB IT LI NL SE**

(56) Entgegenhaltungen:
**EP-A-0 040 789**
**BE-A-648 451**
**FR-A-1 259 128**
**GB-A-771 569**
**GB-A-1 002 343**

(73) Patentinhaber: **BAYER AG, D-5090 Leverkusen 1 Bayerwerk (DE)**

(72) Erfinder: **Probst, Joachim, Dr., Humperdinckstrasse 42, D-5090 Leverkusen 1 (DE)**
Erfinder: **Sonntag, Michael, Dr., Gartenstrasse 27a, D-5068 Odenthal (DE)**
Erfinder: **Richter, Roland, Dr., Roggendorfstrasse 53, D-5000 Köln 80 (DE)**
Erfinder: **Müller, Hans Peter, Dr., Im Kerberich 6, D-5068 Odenthal (DE)**

**EP 0 159 643 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein neues Verfahren zur Herstellung von Hydroxylgruppen aufweisenden Alkoxylierungsprodukten von organischen Carbonsäuren unter Verwendung spezieller Phasentransferkatalysatoren als Beschleuniger für die Alkoxilierungsreaktion.

Es ist bereits bekannt, daß Carboxylgruppen aufweisende organische Verbindungen in wäßrigem oder organischem Milieu mit Alkylenoxiden wie Ethylenoxid, Propylenoxid oder 1,2-Butylenoxid in Gegenwart von basischen Katalysatoren wie tert. Aminen, Tetraalkylammoniumhydroxiden, Alkali- oder Erdalkalioxiden bzw. -hydroxiden, Alkali- bzw. Erdalkalisalzen von Carbonsäuren oder auch in Gegenwart von basischen Ionenaustauchern als Katalysatoren zu den entsprechenden Hydroxyalkylgruppen aufweisenden Verbindungen umgesetzt werden können (vgl. z. B. US-PS-3 116 270, BE-PS-634 310, BE-PS-590 775, GB-PS-771 569, GB-PS-940 766, GB-PS-1 002 343 oder DE-OS-3 148 022).

Bei der Verwendung von tert. Aminen oder von quaternären Ammoniumhydroxiden werden die unter Esterbildung ablaufende Alkoxylierungsreaktion zwar stark beschleunigt und die Umsetzungsgrade deutlich erhöht, jedoch ist im allgemeinen ebenfalls eine wesentliche Erhöhung der Farbzahl festzustellen. (Erd)alkalioxide bzw. -hydroxide sowie (Erd)alkalisalze von Carbonsäuren sind wegen der schlechten Löslichkeit dieser Substanzen in organischen medien in vielen Fällen nur schlecht geeignet. Die Verwendung dieser Substanzen als Katalysator führt daher oftmals zu einem zu niedrigen Veresterungsgrad, d. h. zu zu niedrigen Hydroxylzahlen und zu zu hohen Säurezahlen der Umsetzungsprodukte, so daß diese in Abmischung mit organischen Polyisocyanaten, beispielsweise bei der Herstellung von Zweikomponenten-Polyurethanlacken aufgrund der Säurekatalyse der noch in hoher Konzentration vorliegenden Carboxylgruppen eine zu kurze Standzeit aufweisen.

Auch die Verwendung von Tetraalkylammoniumhalogeniden als Katalysatoren für diese Alkoxylierungsreaktion ist bereits bekannt (BE-PS-648 451).

Gemäß EP-A-0040 789 werden Carboxylgruppen aufweisende Copolymerisate bereits bei ihrer Herstellung, d. h. in situ mit Glycid verestert, wobei die Veresterungsreaktion in Abwesenheit von speziellen Katalysatoren abläuft. Die nachträgliche Überführung von Carboxylgruppen in Hydroxylgruppen durch Alkoxylierung von Carboxylgruppen aufweisenden Copolymerisaten wird in dieser Vorveröffentlichung nicht angesprochen. Die Verfahrensprodukte dieser Vorveröffentlichung können ebenso wie die nachstehend näher beschriebenen erfindungsgemäßen Verfahrensprodukte u.a. als Reaktionspartner für organische Polyisocyanate bei der Herstellung von Beschichtungen auf Polyurethanbasis verwendet werden.

Es war daher die der Erfindung zugrundeliegende Aufgabe, ein neues Verfahren zur Verfügung zu stellen, welches die Alkoxylierung von beliebigen, Carboxylgruppen aufweisenden organischen Verbindungen gestattet, und welches nicht mit den genannten Nachteilen der Verfahren des Standes der Technik behaftet ist.

Diese Aufgabe konnte durch die Bereitstellung des nachstehend näher beschriebenen erfindungsgemäßen Verfahrens gelöst werden.

Gegenstand der Erfindung ist ein Verfahren zur Herstellung von alkoholische Hydroxylgruppen aufweisenden Alkoxylierungsprodukten von organischen Carbonsäuren durch Umsetzung von beliebigen, mindestens eine Carboxylgruppe aufweisenden organischen Verbindungen mit Alkylenoxiden im Sinne einer Alkoxylierungsreaktion in Gegenwart von Katalysatoren, dadurch gekennzeichnet, daß man als Katalysatoren Phasentransferkatalysatoren ausgewählt aus der Gruppe bestehend aus

a) Kronenether-komplexierten, basischen Alkalimetallverbindungen und
b) Komplexen aus (i) basischen Alkalimetallverbindungen und (ii) acyclischen organischen Verbindungen, die mindestens 5 Alkylenoxideinheiten der Formel -R-O- (R= C1-C,-Alkylen) in Form einer oder mehrerer Polyetherketten mit jeweils mindestens 3 Alkylenoxideinheiten, einen Gehalt an innerhalb mindestens einer Polyetherkette angeordneten Alkylenoxideinheiten der genannten Art von insgesamt mindestens 40 Gew.-% und ein Molekulargewicht von mindestens 238 aufweisen,

in einer Menge von 0,01 bis 2,0 Gew.-%, bezogen auf die Menge der Carboxylgruppen aufweisenden organischen Verbindungen, verwendet, wobei man einer Lösung der Carboxylgruppen aufweisenden organischen Verbindung, welche bereits den Katalysator enthält, das Alkylenoxid zudosiert.

Für das erfindungsgemäße Verfahren sind beliebige organische Verbindungen geeignet, die mindestens eine freie Carboxylgruppe aufweisen. Dies bedeutet, daß sowohl niedermolekulare organische Carbonsäuren als auch oligomere bzw. polymere Carboxylgruppen aufweisende Verbindungen beim erfindungsgemäßen Verfahren eingesetzt werden können.

Geeignete niedermolekulare, Carboxylgruppen aufweisende Verbindungen sind z. B. gegebenenfalls olefinisch ungesättigte und gegebenenfalls alkoholische Hydroxylgruppen als Substituenten aufweisende aliphatische Carbonsäuren mit 1 bis 36, vorzugsweise 1 bis 18 Kohlenstoffatomen wie z. B. Ameisensäure, Essigsäure, Propionsäure, die isomeren Buttersäuren, Ethylhexansäure, Stearinsäure, Milchsäure, Rizinolsäure, Ölsäure, dimerisierte Ölsäure, Maleinsäure, Fumarsäure, Adipinsäure, Bernsteinsäure oder Zitronensäure; gegebenenfalls olefinisch ungesättigte und/oder gegebenenfalls alkoholische Hydroxylgruppen als Substituenten aufweisende cycloaliphatische Carbonsäuren mit 6 bis 8 Kohlenstoffatomen wie z. B. Cyclopentancarbonsäure, Cyclohexancarbonsäure, Hexahydrophthalsäure, Tetrahydrophthalsäure oder p-Hydroxy-cyclohexancarbonsäure; aromatische Carbonsäuren mit 6 bis 8 Kohlenstoffatomen wie z. B. Phthalsäure,

Isophthalsäure, Terephthalsäure oder Benzoesäure.

Zu den geeigneten oligomeren bzw. polymeren Carbonsäuren gehören beispielsweise Carboxylgruppen aufweisende Polyester oder Alkydharze wie sie bei der Polykondensation von mehrwertigen Alkoholen, gegebenenfalls im Gemisch mit einwertigen Alkoholen mit mehrbasischen Carbonsäuren, gegebenenfalls im Gemisch mit einbasischen Carbonsäuren oder deren Estern in an sich bekannter Weise erhalten werden, und wie sie beispielsweise in Römpp's Chemielexikon, Band 1, Seite 202, Franckh'sche Verlag Buchhandlung, Stuttgart (1966), definiert oder von D.H. Solomon, The Chemistry of Organie Filmformers, Seiten 75 - 101, John Wiley & Sons Inc. New York, (1967) beschrieben sind. Die Carboxylgruppen aufweisenden Polyester bzw. Alkydharze, die beim erfindungsgemäßen Verfahren eingesetzt werden können, weisen im allgemeinen Säurezahlen von 10 bis 300 mg KOH/g Substanz und ein als Zahlenmittel bestimmtes Molekulargewicht von 1000 bis 20.000 auf (bis zu Molekulargewichten von 5000 dampfdruckosmometrisch bestimmt; bei Molekulargewichten über 5000 membranosmometrisch bestimmt).

Zur Herstellung der "sauren" Polyester bzw. Alkydharze geeignete Alkohole sind beispielsweise aliphatische, cycloaliphatische und/oder aromatische Alkohole mit 1 bis 6, vorzugsweise 1 bis 4, an nicht-aromatische C-Atome gebundene OH-Gruppen und 1 bis 24 C-Atomen pro Molekül, z. B. Glykole wie Ethylenglykol, Propylenglykol, Butandiole, Hexandiole; perhydrierte Bisphenole; ferner Trimethylolethan, Trimethylolpropan, Glycerin, Pentaerythrit, Mannit und Sorbit; einwertige kettenabbrechende Alkohole wie Propanol, Butanol, Cyclohexanol und Benzylalkohol.

Für die Synthese der Alkydharze bzw. Polyester geeignete Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 4-12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Trimellitsäureanhydrid, Pyromellitsäureanhydrid, Maleinsäureanhydrid, Adipinsäure- und Bernsteinsäureanhydrid, ferner halogenierte Säuren, wie Chlorphthalsäuren und Hetsäure.

Für die Herstellung der Polyester bzw. Alkydharze geeignete Monocarbonsäuren oder Monocarbonsäureester sind aliphatische, cycloaliphatische gesättigte und ungesättigte und/oder aromatische Monocarbonsäuren mit 6 - 24 C-Atomen pro Molekül wie Benzoesäure, Butylbenzoesäure, Tolylsäure, Hexahydrobenzoesäure, Abietinsäure, Milchsäure sowie Fettsäuren und Ester derselben wie Leinöl, Sojaöl, Holzöl, Saffloröl, Ricinusöl, Ricinenöl, Baumwollsaatöl, Erdnußöl, Tallölfettsäure, Leinölfettsäure, Sojaöl-, Holzöl-, Saffloröl- und Ricinenölfettsäure und aus natürlichen, ungesättigten Ölen oder Fettsäuren durch Konjugierung oder Isomerisierung gewonnene Produkte; geeignete gesättigte Fettsäuren sind beispielsweise Kokosfettsäuren und 2-Ethylhexansäure.

Die Polyester und Alkydharze werden in an sich bekannter Weise durch Kondensation nach den üblichen Verfahren hergestellt.

Im allgemeinen läßt man hierbei die Rohstoffgemische bei Temperaturen von 140 bis 250°C in einer Schutzgasatmosphäre, z. B. $N_2$, so lange unter Wasserabspaltung reagieren, bis die gewünschte Säurezahl erreicht ist.

Besonders bevorzugte oligomere bzw. polymere Carboxylgruppen aufweisende Verbindungen für das erfindungsgemäße Verfahren sind jedoch Copolymerisate von Acrylsäure, Methacrylsäure, Maleinsäure oder deren Derivaten bzw. von Mischungen dieser Säuren mit anderen ungesättigten Monomeren der unten beispielhaft genannten Art mit Säurezahlen von 20 bis 500 und Hydroxylzahlen von 0 bis 130 mg KOH/g Substanz. Unter Derivaten der Maleinsäure sind hierbei unter anderem Monoamide bzw. Monoester zu verstehen, die z. B. durch Umsetzung von Maleinsäureanhydrid mit Aminen wie Ethylamin oder n-Butylamin bzw. Alkoholen wie Ethanol oder n-Butanol hergestellt werden können.

Unter diesen Copolymerisaten sind insbesondere jene bevorzugt geeignet, die

3 bis 50 Gew.-% Acrylsäure und/oder Methacrylsäure 10 bis 90 Gew.-% Styrol, Methylmethacrylat, Acrylnitril und/oder Methacrylnitril,

5 bis 80 Gew.-% Acrylsäurealkylester mit 1 bis 12 Kohlenstoffatomen im Alkylrest und/oder Methacrylsäurealkylester mit 2 bis 12 Kohlenstoffatomen im Alkylrest und 0 bis 30 Gew.-% Acrylsäure-hydroxyalkylester und/oder Methacrylsäurehydroxyalkylester mit 2 bis 6 Kohlenstoffatomen im Hydroxyalkylrest in copolymerisierter Form enthalten, wobei sich die genannten Prozentsätze auf die Gesamtmenge der Copolymerisate beziehen und sich jeweils zu 100 ergänzen.

Die Herstellung dieser Acrylatharze kann durch Polymerisation nach üblichen Verfahren durchgeführt werden, bevorzugt in Lösung oder Substanz.

Als Lösungsmittel kommen beispielsweise Aromaten wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösungsmittel wie Methylenchlorid oder Trichlormonofluorethan in Betracht. Falls die beispielhaft genannten apolaren Lösungsmittel ein zu geringes Lösungsvermögen aufweisen, werden sie vorteilhaft in Abmischung mit den beispielhaft genannten polaren Lösungsmitteln eingesetzt.

Die Herstellung der Polyacrylatharze kann entweder kontinuierlich oder diskontinuierlich durchgeführt werden. Wenn man in einen Polymerisationsreaktor gleichmäßig und kontinuierlich die Monomermischung und den Initiator eindosiert und gleichzeitig die entsprechende Menge Polymerisat kontinuierlich abführt, so stellt sich nach einer relativ kurzen Anfahrperiode im Reaktor ein stationärer Zustand ein.

Stationäre Bedingungen liegen dann vor, wenn sich die Konzentrationen der Reaktionspartner im Laufe der

Zeit nicht ändern. In diesem Fall ist die Herstellung chemisch einheitlicher Copolymerer möglich. Chemisch nahezu einheitliche Copolymerisate können aber auch hergestellt werden, wenn man die Reaktionsmischung mit konstanter Geschwindigkeit in einen Rührkessel einlaufen läßt, ohne das Polymerisat abzuführen.

Geeignete Initiatoren zur Herstellung der Polyacrylatharze sind solche Verbindungen, deren Halbwertszeiten des Radikalzerfalls bei 80 bis 180°C zwischen 0,01 und 400 Minuten liegen. Im allgemeinen erfolgt die Copolymerisationsreaktion im zuletztgenannten Temperaturbereich, vorzugsweise zwischen 100°C und 160°C, unter einem Druck von $10^3$ bis $2 \cdot 10^4$ mbar, wobei sich die genaue Temperatur nach der Art des Initiators richtet. Die Initiatoren werden in Mengen von 0,05 bis 6 Gew.-%, bezogen auf die Gesamtmenge an Monomeren, eingesetzt. Im allgemeinen werden die eingesetzten Monomeren zu mindestens 98 % umgesetzt.

Geeignete Initiatoren sind z. B. aliphatische Azoverbindungen wie Azoisobutyronitril sowie Peroxide wie z. B. Dibenzoylperoxid, tert.-Butylperpivalat, tert.-Butylper-2-ethylhexanoat, tert.-Butylperbenzoat, tert.-Butylhydroperoxid, Di-tert.-butylperoxid, Cumolhydroperoxid sowie Dicyclohexyl- und Dibenzylperoxydicarbonat.

Zur Regelung des Molekulargewichtes des Acrylatharzes können übliche Regler eingesetzt werden, wie z. B. n-Dodecylmercaptan, Diisopropylxanthogendisulfid, Di(methylentrimethylolpropan)xanthogendisulfid und Thioglykol. Besonders bevorzugt ist wegen seiner Hydroxygruppe Thioglykol. Die Regler werden in Mengen von 0,1 bis 3 Gew.-%, bezogen auf das Monomerengemisch, zugegeben.

Die Monomeren werden im wesentlichen in den gleichen Verhältnissen, wie zur Polymerisation eingesetzt, in das Copolymerisat eingebaut, wobei die einpolymerisierten Einheiten im wesentlichen statistisch verteilt sind. Die Carboxylgruppen enthaltenden Acrylatpolymerisate besitzen mittlere Molgewichte $M_{GPC}$ von 1 000 bis 40 000, vorzugsweise 3 000 bis 20 000, und ihre 40- bis 80-gew.-%-igen Lösungen in Ethylglykolacetat besitzen bei 20°C eine Viskosität von ca. 10 bis 100 000 mPa.s, je nach zugesetzter Reglermenge und -konzentration. Ferner besitzen die Carboxylgruppen enthaltenden Acrylatpolymerisate molekulare Uneinheitlichkeiten U von 0,5 - 3, vorzugsweise 0,5 - 2.

Die molekulare Uneinheitlichkeit U (= Heterogenitätsfaktor U) ist definiert durch die Gleichung:

$$U = (M_w/M_n) - 1$$

wobei
$M_w$ Gewichtsmittel,
$M_n$ Zahlenmittel des Molekulargewichts
sind.

Dem Fachmann ist bekannt, daß Produkte mit gleichem mittlerem Molekulargewicht (Zahlenmittel $M_n$), aber verschiedener molekularer Uneinheitlichkeit unterschiedliche Lösungsviskositäten besitzen. Das Produkt mit der größeren Uneinheitlichkeit besitzt immer eine größere Lösungsviskosität, da hochmolekulare Anteile einen wesentlich größeren Beitrag zur Viskosität liefern als die gleiche Menge niedermolekularer Anteile. Eine breite Molekulargewichtsverteilung bedeutet außerdem, daß die Anzahl der Reaktivgruppen pro Molekül und damit die Reaktivität der einzelnen Ketten große Unterschiede aufweist.

Auch die Säurezahlen und Hydroxylzahlen dieser besonders bevorzugt zu verwendenden Ausgangsverbindungen liegen innerhalb der obengenannten Bereiche.

Für das erfindungsgemäße Verfahren geeignete Alkylenoxide sind beliebige organische Verbindungen, die die Struktureinheit

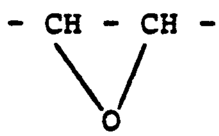

aufweisen. In Betracht kommen somit beliebige Verbindungen der Formel

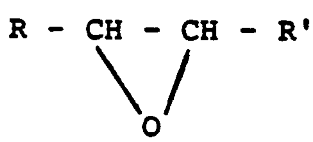

für welche R und R' für gleiche oder verschiedene Reste stehen und Wasserstoff, eine Alkylgruppe mit 1 bis 16 Kohlenstoffatomen, eine Cycloalkylgruppe mit 5 bis 12 Kohlenstoffatomen oder eine Arylgruppe mit 6 bis 12 Kohlenstoffatomen bedeuten, wobei die genannten Substituenten auch Heteroatome bzw. funktionelle Substituenten, insbesondere Hydroxylsubstituenten aufweisen können. Besonders gut geeignet sind beispielsweise Ethylenoxid, Propylenoxid, 1,2-Butylenoxid, 2,3-Butylenoxid, Styroloxid, Cyclohexenoxid, Glycidylalkohol oder Versaticsäureglycidylester. Besonders bevorzugt werden Ethylenoxid und Propylenoxid, bzw. Gemische dieser Alkylenoxide eingesetzt.

Das erfindungsgemäße Verfahren wird in Gegenwart von Phasentransferkatalysatoren als Beschleuniger für die Alkoxylierungsreaktion durchgeführt. Zu den erfindungsgemäß geeigneten Phasentransferkatalysatoren gehören:

a) Kronenether-komplexierte basische Alkaliverbindungen, wie sie beispielsweise in J of Amer. Chem. Soc. 89 (1967) auf Seiten 7017 ff. oder in DE-OS-3 100 262 beschrieben sind.

Besonders gut geeignete Katalysatoren sind 1 : 1-Komplexe von (i) basischen Natrium- oder Kaliumverbindungen und (ii) 1,4,7,10,13-Pentaoxacyclopenta-decan ("15-Krone-5") bzw. 1,4,7,10,13,16-Hexaoxa-cyclooctadecan ("18-Krone-6"). Hierbei sind unter "1 : 1-Komplexen" Komplexe von äquimolaren Mengen einer basischen Natrium- oder Kaliumverbindung mit 15-Krone-5 bzw. 18-Krone-6 zu verstehen. Die Komplexierung der Natriumverbindungen geschieht mit dem erstgenannten, die Komplexierung der Kaliumverbindungen mit dem letztgenannten cyclischen Polyether.

Als basische Natrium- oder Kaliumverbindungen kommen beliebige Verbindungen der genannten Alkalimetalle in Betracht, deren wäßrige Lösung in einmolarer Konzentration einen pH-Wert von mindestens 7,5 aufweist, und deren Anion den Oxiranring in der gewünschten Weise öffnet.

Geeignete basische Verbindungen sind beispielsweise Natrium- oder Kaliumcarboxylate mit vorzugsweise 1 bis 12 C-Atomen, -alkoholate mit vorzugsweise 1 bis 8 C-Atomen, -phenolate mit vorzugsweise 6 bis 10 C-Atomen, -carbonate und -hydroxide. Dies sind z. B. die Formiate, Acetate, Propionate, 2-Ethylhexanoate, n-Dodecanoate, Caprylate, Methylate, Ethylate, Butylate, Hexylate, Phenolate, tert.-Butylphenolate, Carbonate und Hydroxide der genannten Metalle.

Zu den bevorzugten basischen Verbindungen gehören Kaliumhydroxid und Kaliumacetat.

Die zur Komplexbildung eingesetzten cyclischen Polyether stellen bekannte Verbindungen dar. Ihre Herstellung kann beispielsweise gemäß G. Johns, C. J. Ransom, C. B. Reese, Synthesis (1976), Seite 515 erfolgen.

Die Herstellung der 1 : 1-Komplexe kann beispielsweise nach einer der nachstehenden Methoden erfolgen:

1. Die Herstellung erfolgt unter Verwendung des Lösungsmittels, welches auch als Reaktionsmedium bei der Durchführung der Polymerisation und der anschließenden Alkoxylierungsreaktion dienen kann, dergestalt, daß man den cyclischen Polyether in dem Lösungsmittel auflöst und das Alkali-Metallsalz als Feststoff unter Komplexbildung und Auflösung einrührt. Eventuelle Trübungen werden durch Filtration entfernt.

2. Es ist natürlich auch möglich, den cyclischen Polyether in einem anderen inerten Lösungsmittel aufzulösen und danach das Alkali-Metallsalz unter Komplexbildung und Auflösen zuzudosieren.

Bei der Herstellung der 1 : 1-Komplexe werden vorzugsweise die Komponenten (i) und (ii) in äquimolaren Mengen eingesetzt. Selbstverständlich wäre es auch möglich, in anderen Mengenverhältnissen zu arbeiten, was jedoch zur Folge hätte, daß entweder die basische Alkali-Metallverbindung oder der cyclische Polyether im Überschuß vorliegt. Wie leicht einzusehen ist, wäre eine derartige Verfahrensweise wenig zweckmäsig, da der jeweilige Überschuß keine oder nur eine vergleichsweise schlechte katalytische Wirkung aufweisen würde. Bei der Herstellung von Lösungen der 1 : 1-Komplexe werden die Komponenten (i) und (ii) im allgemeinen in solchen Mengen eingesetzt, daß 0,4 bis 40, vorzugsweise 0,8 bis 20 gew.-%-ige Lösungen der Komplexe vorliegen. Es ist gerade einer der Hauptvorteile der Katalysatoren, daß sie in derartigen, vergleichsweise hohen Konzentrationen in den vorstehend beispielhaft genannten Lösungsmitteln löslich sind.

b) Komplexe aus (i) basischen Alkalimetallverbindungen der genannten Art und (iii) acyclischen organischen Verbindungen, die

mindestens 5 Alkylenoxideinheiten der Formel -R-O(R = $C_1$-$C_4$-Alkylen) in Form einer oder mehrerer Polyetherketten mit jeweils mindestens 3 Alkylenoxideinheiten,

einen Gehalt an innerhalb mindestens einer Polyetherkette angeordneten Alkylenoxideinheiten der genannten Art von insgesamt mindestens 40 Gew.-% und

ein Molekulargewicht von mindestens 238 aufweisen.

Bei der Katalysatorkomponente (iii) handelt es sich hierbei im Unterschied zu den obengenannten cyclischen Verbindungen (ii) um acyclische organische Verbindungen, die die obengenannten Kriterien erfüllen, insbesondere um solche, die

mindestens 5 Alkylenoxideinheiten der genannten Art, vorzugsweise Ethylenoxid- und gegebenenfalls Propylenoxideinheiten in Form einer oder mehrerer Polyetherketten mit jeweils mindestens 3, vorzugsweise jeweils mindestens 5 Alkylenoxideinheiten,

einen Gehalt an innerhalb von Polyetherketten eingebauten Alkylenoxideinheiten der genannten Art von mindestens 55 Gew.-%, wobei mindestens 50 %, vorzugsweise mindestens 80 % aller vorliegender Alkylenoxideinheiten Ethylenoxideinheiten darstellen und ein Molgewicht von 238 bis 3000, besonders bevorzugt von 282 bis 1000 aufweisen. Besonders bevorzugt sind technische Gemische von Polyethylenglykolen des mittleren Molekulargewichts 350 bis 450.

Weitere typische Beispiele für geeignete Katalysatorkomponenten (iii) sind diesen Definitionen entsprechende 1- bis 3-wertige Polyetheralkohole, wie sie in an sich bekannter Weise durch Alkoxylierung, insbesondere Ethoxylierung geeigneter Startermoleküle wie einwertigen Alkoholen wie Methanol, Ethanol, n- oder i-Propanol, n-, i-, sec.oder tert.-Butanol, von Wasser oder von mindestens zweiwertigen Startermolekülen wie Ethylenglykol, Propan-diol-(1,2), Propandiol-(1,3), Butan-, Pentan- oder Hexandiolen, Glycerin, Trimethylolethan oder Trimethylolpropan erhalten werden können. Geeignet sind auch solche Polyether der beispielhaft genannten Art, deren endständige(n) Hydroxylgruppe(n) beispielsweise durch eine Alkylierung, Acylierung und/oder Urethanisierung verschlüsselt wurden, so daß keine Hydroxyl-Endgruppen mehr vorliegen.

Die Verschlüsselung der endständigen Hydroxylgruppe(n) der oben beispielhaft genannten Polyetheralkohole durch Alkylierung geschieht beispielsweise durch Umsetzung der Polyetheralkohole mit Alkylierungsmitteln wie z. B. Dimethylsulfat, $C_1$-$C_4$-Alkyl-halogeniden oder Benzylhalogenid; die Verschlüsselung durch eine Acylierungsreaktion durch Umsetzung mit Acylierungsmitteln wie z. B. Essigsäureanhydrid, Acetylchlorid oder Benzoylchlorid; die Verschlüsselung durch Urethanisierung durch Umsetzung mit einwertigen Isocyanaten wie z. B. Methyl-, Ethyl-, Hexyl- oder Phenylisocyanat. Durch Umsetzung der beispielhaft genannten Polyetheralkohole mit Aldehyden wie Formaldehyd, Acetaldehyd oder Benzaldehyd im Sinne einer Acetalisierung werden gegebenenfalls substituierte Methylenoxideinheiten in die Polyether eingeführt.

Zur Herstellung dieser als Veresterungskatalysatoren einzusetzenden Komplexe werden die beispielhaft genannten Komponenten (i) und (iii) bzw. beliebige ihrer Gemische in solchen Mengenverhältnissen miteinander umgesetzt, daß auf jedes Grammäquivalent an basischer Metallverbindung (i) 1,0 bis 5,0, vorzugsweise 1,0 bis 2,5 Mol an obigen Definitionen entsprechenden Verbindungen (iii) zur Verfügung stehen. Falls bei der Herstellung der Komplexe Alkoxylierungsprodukte der beispielhaft genannten Startermoleküle bzw. deren Derivate eingesetzt werden, die wegen der statistisch verlaufenden Alkoxylierungsreaktion Gemische darstellen, die neben den obigen Definitionen entsprechenden Verbindungen (iii) auch diesen Definitionen, beispielsweise wegen eines zu geringen Gehalts an Alkylenoxideinheiten, nicht entsprechenden Verbindungen enthalten, muß die Menge solcher Gemische selbstverständlich so bemessen werden, daß obige Mengenverhältnisse der Komponenten (i) und (iii) eingehalten werden. Die Umsetzung zwischen den Komponenten (i) und (iii), d. h. die Komplexbildung erfolgt im allgemeinen spontan bei einer Temperatur von ca. 10 bis 60°C, insbesondere wenn miteinander verträgliche Komponenten (i) und (iii) in Abwesenheit von Lösungsmitteln eingesetzt werden. Die Bildung der Komplexe kann jedoch auch in Gegenwart von Lösungsmitteln bzw. Lösungsmittelgemischen der oben beispielhaft genannten Art erfolgen.

Die Beschleuniger werden beim erfindungsgemäßen Verfahren entweder als Lösung in einem geeigneten organischen Lösungsmittel wie z. B. Aromaten, Estern, Ethern, Ketonen, halogenhaltigen Lösungsmitteln der oben beispielhaft genannten Art oder in Substanz oder auch in Form.

Ihrer Einzelkomponenten, die ihrerseits gegebenenfalls in einem Lösungsmittel der beispielhaft genannten Art gelöst sein können eingesetzt, wobei die Komplexbildung in situ erfolgt. Die Menge der Beschleuniger beträgt im allgemeinen 0,01 bis 2,0 Gew.-%, vorzugsweise 0,02 bis 1,0 Gew.-%, bezogen auf die Menge der Carboxylgruppen aufweisenden organischen Verbindung.

Das erfindungsgemäße Verfahren wird vorzugsweise in Gegenwart eines Lösungsmittels bzw. Lösungsmittelgemischs durchgeführt. Geeignete Lösungsmittel sind beispielsweise die oben im Zusammenhang mit der Herstellung der Acrylatharze genannten. Die erfindungsgemäße Alkoxylierungsreaktion wird im allgemeinen innerhalb des Temperaturbereichs von 40 bis 200°C, vorzugsweise zwischen 100°C und 200°C, gegebenenfalls unter Druck, durchgeführt. Im allgemeinen geht man so vor, daß man einer, beispielsweise 40- bis 80-gew.-%-igen Lösung der Carboxylgruppen aufweisenden organischen Verbindung, welche bereits den erfindungswesentlichen Beschleuniger enthält, während eines Zeitraums von 0,2 bis 10 Stunden, vorzugsweise 1 bis 5 Stunden, kontinuierlich oder diskontinuierlich das Alkylenoxid bzw. das Alkylenoxidgemisch zudosiert und anschließend das Reaktionsgemisch noch 2 bis 15 Stunden, vorzugsweise 4 bis 10 Stunden nachrührt. Die Menge des Alkylenoxids wird hierbei vorzugsweise so bemessen, daß das Äquivalentverhältnis von Alkylenoxid zu Carboxylgruppen bei 0,5 : 1 bis 2,0 : 1, vorzugsweise 0,9 : 1 bis 1,1 : 1 beträgt.

Im allgemeinen ist man bei der Durchführung des erfindungsgemäßen Verfahrens bestrebt, einerseits eine möglichst selektive Veresterung der Carboxylgruppen unter Bildung von Hydroxyalkylestergruppen zu erreichen, und andererseits die Bildung von meist unerwünschten Ethergruppen aufweisenden Umsetzungsprodukten (durch Alkoxylierung von Hydroxylgruppen) ebenso wie die mögliche Bildung von Estergruppen durch eine Veresterungsreaktion zwischen im Reaktionsgemisch vorliegenden Hydroxylund Carboxylgruppen weitgehend auszuschließen. Dies wird erfindungsgemäß einerseits durch die geringe Konzentration der erfindungswesentlichen Beschleuniger und andererseits durch das allmähliche Zugeben des Alkylenoxids zwecks Vermeidung einer zu hohen lokalen Epoxidkonzentration erreicht. Das erfindungsgemäße Verfahren gestattet in der Tat eine weitgehend selektive Überführung der Carboxylgruppen in Hydrgxyalkylestergruppen, so daß bei der besonders bevorzugten Verwendung der Alkylenoxide in, bezogen auf die Säuregruppen, äquivalenten Mengen Umsetzungsprodukte mit hoher Hydroxylzahl und niedriger Säurezahl resultieren.

Insbesondere die erfindungsgemäßen Verfahrensprodukte auf Basis der oben beispielhaft genannten, Carboxylgruppen aufweisenden Polyester bzw. Alkydharze und besonders bevorzugt die erfindungsgemäßen Verfahrensprodukte auf Basis der besonders bevorzugt einzusetzenden, Carboxylgruppen aufweisenden, radikalisch polymerisierten Copolymerisate stellen wegen ihres hohen Gehalts an Hydroxylgruppen und ihres niedrigen Gehalts an Carboxylgruppen wertvolle Reaktionspartner für organische Polyisocyanate bei der Herstellung von Polyurethankunststoffen, insbesondere Polyurethanlacken dar. Da durch die erfindungsgemäße Alkoxylierungsreaktion das Molekulargewicht der oligomeren bzw. polymeren Ausgangsverbindungen nicht nennenswert erhöht wird, liegen die Molekulargewichte der auf den oligomeren bzw. polymeren Ausgangsmaterialien basierenden erfindungsgemäßen Verfahrensprodukte innerhalb der bezüglich der Ausgangsmaterialien oben genannten Bereiche. Die Hydroxylzahlen der erfindungsgemäßen Verfahrensprodukte auf Basis der genannten oligomeren oder polymeren Ausgangsverbindungen liegen im allgemeinen innerhalb des Bereichs von 20 bis 250, vorzugsweise 30 bis 220 (mg KOH/g Substanz) und die Säurezahlen zwischen 2 und 25 (mg KOH/g Substanz), wobei jedoch gesagt werden kann, daß aufgrund der erfindungsgemäßen Modifizierung die Säurezahl im allgemeinen weniger als die Hälfte der Säurezahl des entsprechenden Ausgangsmaterials beträgt. Bei der erfindungsgemäß besonders bevorzugten Verwendung der

Alkoxylierungsmittel in äquivalenten Mengen, bezogen auf die in den Ausgangsmaterialien vorliegenden Carboxylgruppen, gelingt im allgemeinen durch das erfindungsgemäße Verfahren eine Verringerung der Säurezahl auf weniger als 10 % des Ausgangswertes.

Wegen ihres geringen Gehalts an Carboxylgruppen stellen insbesondere die erfindungsgemäßen Verfahrensprodukte auf Basis der oben beispielhaft genannten oligomeren oder polymeren Ausgangsverbindungen, besonders bevorzugt die erfindungsgemäßen Verfahrensprodukte auf Basis der oben beispielhaft genannten Copolymerisate von Acrylsäure und/oder Methacrylsäure wertvolle Ausgangsmaterialien zur Herstellung von Polyurethankunststoffen dar.

För diese Verwendung geeignete Polyisocyanate sind insbesondere die sogenannten Lackpolyisocyanate des Standes der Technik, deren Herstellung beispielsweise in US-PS-3 124 605, US-PS-3 358 010, US-PS-3 903 126, US-PS-3 903 127, US-PS-3 976 622, US-PS-3 183 112, US-PS-3 394 111, US-PS-3 645 979 oder US-PS-3 919 218 bzw. in GB-PS-1 060 430, GB-PS-1 234 972, GB-PS-1 506 373 oder GB-PS-1 458 564 beschrieben ist.

Vorzugsweise handelt es sich bei diesen Lackpolyisocyanaten um Biuretgruppen, Urethangruppen oder Isocyanuratgruppen aufweisende Polyisocyanate auf Basis einfacher, handelsüblicher Diisocyanate wie Hexamethylendiisocyanat, 2,4- und/oder 2,6-Diisocyanatotoluol, 2,4'-und/oder 4,4'-Diisocyanato-dicyclohexylmethan oder Isophorondiisocyanat.

Die Biuretgruppen aufweisenden Polyisocyanate stellen im allgemeinen Umsetzungsprodukte von Hexamethylendiisocyanat mit Wasser oder mit Wasser abspaltenden Verbindungen dar. Es handelt sich hierbei insbesondere um Gemische von Tris-(isocyanatohexyl)-biuret mit seinen höheren Homologen. Diese Biuretpolyisocyanate sind die besonders bevorzugt einzusetzenden Lackpolyisocyanate.

Die Urethangruppen enthaltenden Polyisocyanate stellen insbesondere Umsetzungsprodukte von 2,4- und/oder 2,6-Diisocyanatotoluol oder von Isophorondiisocyanat mit unterschüssigen Mengen an mehrwertigen Alkoholen, insbesondere Trimethylolpropan, gegebenenfalls im Gemisch mit Propandiolen bzw. Butandiolen, dar.

Bei den Isocyanuratgruppen aufweisenden Lackpolyisocyanaten handelt es sich vorzugsweise um Isocyanatgruppen aufweisende Trimerisate bzw. Mischtrimerisate der oben beispielhaft genannten einfachen Diisocyanate.

Grundsätzlich ist es auch möglich, die Isocyanatkomponente in mit Blockierungsmitteln für Isocyanatgruppen wie z. B. Phenolen, Oximen wie Cyclohexanonoxim, ε-Caprolactam, Malonsäurediethylester oder Acetessigsäureethylester blockierter Form einzusetzen, so daß hitzevernetzbare Einbrennlacke resultieren.

Bei der Verwendung der erfindungsgemäßen Verfahrensprodukte, insbesondere bei der Verwendung der erfindungsgemäßen Verfahrensprodukte auf Basis der oben beispielhaft genannten oligomeren oder polymeren Ausgangsmaterialien bei der Herstellung von Zweikomponenten-Polyurethanlacken, werden die erfindungsgemäßen Verfahrensprodukte und die beispielhaft genannten Lackpolyisocyanate in solchen Mengen eingesetzt, daß auf jede Hydroxylgruppe der erfindungsgemäßen Verfahrensprodukte 0,5 bis 2, vorzugsweise 0,7 bis 1,3, gegebenenfalls blockierte Isocyanatgruppen entfallen.

Bei der Verwendung können neben den erfindungsgemäsen Verfahrensprodukten selbstverständlich weitere, aus der Polyurethanlackchemie bekannte Reaktionspartner für organische Polyisocyanate mitverwendet werden. Selbstverständlich können bei der erfindungsgemäßen Verwendung alle aus der Polyurethanlacktechnologie üblichen Hilfs- und Zusatzmittel wie z. B. Lösungsmittel, Verlaufmittel, viskositätskontrollierende Zusätze, Mattierungsmittel, Beschleuniger, Pigmente oder Füllstoffe mitverwendet werden.

Bei der Herstellung von Lacküberzügen unter Verwendung der erfindungsgemäßen Verfahrensprodukte kann nach allen beliebigen Methoden der Lacktechnologie wie z. B. Spritzen, Streichen, Tauchen, Drucken oder Walzen vorgegangen werden, wobei Substrate beliebiger Art wie z. B. Metalle, Holz, Mauerwerk, Beton, Glas, Keramik, Kunststoffe, Textilien oder Papier beschichtet werden können. Die gebrauchsfertigen Zweikomponenten-Polyurethanlacke zeichnen sich auch bei Verwendung von Lackpolyisocyanaten mit freien Isocyanatgruppen durch lange Standzeiten und schnelle Trocknungszeiten, sowie guten Verlauf und Farbtreue bzw. Lichtechtheit und hervorragende mechanische Eigenschaften der mit ihnen erhaltenen Beschichtungen aus. Besonders hervorzuheben ist auch die ausgezeichnete Verdünnbarkeit, insbesondere von Zweikomponenten-Polyurethanlacken auf Basis der erfindungsgemäß modifizierten Copolymerisate der Acrylsäure und/oder Methacrylsäure und den beispielhaft genannten Lackpolyisocyanaten mit aromatischen Kohlenwasserstoffen wie z. B. Toluol oder Xylol.

Bei Verwendung von Lackpolyisocyanaten mit freien Isocyanatgruppen erfolgt die Aushärtung der Lacküberzüge bei 20 bis 140°C, bevorzugt bei 20 bis 60°C, während bei Verwendung von blockierten Polyisocyanaten Einbrennlacke resultieren, die bei 120 bis 180°C ausgehärtet werden.

Die nachfolgenden Beispiele dienen der weiteren Erläuterung der Erfindung. Alle Prozentangaben beziehen sich auf Gewichtsprozente, sofern nichts anderslautendes vermerkt ist.

**Beispiel 1**

192 g Zitronensäure (wasserfrei) werden in 255 g Ethylglykolacetat warm gelöst. In diese Lösung gibt man 1,42 g eines 1 : 1-Komplexes aus Kaliumacetat/18-Krone-6 (1,4,7,10,13,16-Hexaoxacyclooctadecan). Anschließend werden innerhalb von 75 Minuten 191 g Propylenoxid bei 100 bis 110°C zudosiert. Nach 15 Minuten

Rühren wird kein Rückfluß mehr beobachtet (kein freies Propylenoxid) und die 60 %-ige Lösung besitzt eine Säurezahl (DIN 53 402) von 84.

Dosiert man zu dieser Lösung bei 100 bis 110° C weiteres Propylenoxid bis zur Sättigung, so werden innerhalb von 8 Stunden noch 78 g Propylenoxid aufgenommen und man erhält eine gelbe Lösung mit einer Säurezahl von 5,3 und einer Hydroxylzahl (DIN 53 240) von 332. Das Äquivalentverhältnis von Carboxylgruppen zu Epoxidgruppen liegt bei 1 : 1,5.

**Beispiel 2** (Vergleich)

192 g Zitronensäure (wasserfrei) werden in 255 g absol. Ethylglykolacetat warm gelöst. In diese Lösung werden innerhalb von 75 Minuten 191 g Propylenoxid bei 100 bis 110° C zudosiert. Nach 5 Minuten Rühren beobachtet man keinen Rückfluß mehr (kein freies Propylenoxid) und die 60 %-ige Lösung besitzt eine Säurezahl (DIN 53 402) von 135. Dosiert man zu dieser Lösung bei 100 bis 110° C weiteres Propylenoxid bis zur Sättigung, so werden innerhalb von 13 Stunden noch 151 g Propylenoxid aufgenommen und man erhält eine gelbliche Lösung mit einer Säurezahl von 20,0 und einer Hydroxylzahl (DIN 53 420) von 317.

**Beispiel 3**

In einem Dreihalskolben mit Rührer, Rückflußkühler und Tropftrichter werden 149 g (0,5 Mol) Ricinolsäure in 149 g Ethylglykolacetat gelöst und mit 0,31 g einer separat hergestellten Katalysatormischung (I) versetzt. Die Apparatur wird mit $N_2$ gespült und der Kolbeninhalt auf 100 bis 110° C aufgeheizt. Bei dieser Temperatur tropft man innerhalb von 90 Minuten 37,7 g (0,65 Mol) Propylenoxid zu. Die Mischung wird dann 15,5 Stunden bei 100 bis 110° C nachgerührt. Nach Abkühlen erhält man eine gelbliche Lösung mit einer Säurezahl von 8 und einer Hydroxylzahl (DIN 53 420) von 167 (OHZ ber. 170). Äquivalentverhältnis COOH : Epoxid = 1 : 1,3.

**Beispiel 4**

Man verfährt wie im Beispiel 3 beschrieben, nur mit dem Unterschied, daß anstelle der Katalysatormischung (I) 0,16 g der Katalysatormischung (II) eingesetzt wird. Nach Abkühlen erhält man eine gelbliche Lösung mit einer Säurezahl von 16,4 und einer Hydroxylzahl (DIN 53 240) von 169 (OHZ ber. 170).

**Beispiel 5** (Vergleich)

Man verfährt wie im Beispiel 3 beschrieben, nur mit dem Unterschied, daß kein Katalysator verwendet wird. Die Eintropfzeit des Propylenoxids bei 100 bis 110° C beträgt dabei 12 Stunden. Die Nachrührzeit beträgt 5 Stunden bei 100 bis 110° C. Nach Abkühlen erhält man eine hellbraune Lösung mit einer Säurezahl von 37,5 und einer Hydroxylzahl (DIN 53 240) von 154 (OHZ ber. 170).

**Herstellung der Katalysatorlösung I**

6 g (0,11 Mol) Kaliumhydroxid werden bei Raumtemperatur in 100 g Ethanol gelöst. Nach Zugabe von 200 g (0,5 Mol) Dimethylether eines Polyethylenglykols mit dem mittleren Molekulargewicht Mn = 400 wird Ethanol im Wasserstrahlvakuum bis 60° C Sumpftemperatur abdestilliert. Man erhält eine klare, farblose Lösung mit einer Viskosität von ca. 600 m · Pas bei 25° C.

**Herstellung der Katalysatorlösung II**

10,8 g (0,11 Mol) Kaliumacetat werden bei Raumtemperatur in 100 g Ethanol gelöst. Nach Zugabe von 100 g (0,25 Mol) des Polyethylenglykols mit dem mittleren Molekulargewicht Mn = 400 wird Ethanol im Wasserstrahlvakuum bis 60° C Sumpftemperatur abdestilliert. Man erhält eine klare, wenig gelbe Lösung mit einer Viskosität von ca. 600 m · Pas bei 25° C.

**Beispiele 6 bis 9**

a) Herstellung eins sauren Copolymeren
In einem 40 ltr.-Rührautoklaven werden 6250 g Ethylglykolacetat unter Stickstoffatmosphäre vorgelegt und auf 140°C erwärmt. Bei dieser Temperatur, die kontrolliert gehalten wird, wird eine Monomermischung aus 3720 g Acrylsäure, 6000 g Styrol, 3000 g Methylmethacrylat und 1940 g 2-Ethylhexylacrylat sowie eine Initiatormischung aus 600 g Di-t-butylperoxid und 4000 g Ethylglykolacetat innerhalb von 4 Stunden unter Luftausschluß zudosiert. Anschließend wird noch mit einer Mischung von 30 g Di-t-butylperoxid und 100 g Ethylglykolacetat nachaktiviert und innerhalb von ca. 4 Stunden auspolymerisiert.
b) Veresterung des sauren Copolymerisats mit Propylenoxid
In den nachfolgenden Beispielen liegt das Äquivalentverhältnis von Propylenoxid zu Carboxylgruppen bei 1,05 : 1.
25640 g der ca. 60 gew.-%-igen, unter a) beschriebenen Copolymerisatlösung werden bei 140°C mit den in Tab. 1 aufgelisteten Katalysatorlösungen versetzt. Anschließend werden innerhalb von 1 Stunde 3147 g Propylenoxid und 650 g Ethylglykolacetat zudosiert. Daraufhin wird noch 6 Stunden nachgerührt und am Ende Restmonomere destillativ entfernt. Die Konzentrationen, die Viskositäten, die Hydroxyl- und Säurezahlen sowie die Farbzahlen sind in Tabelle 1 aufgelistet.

Tabelle 1

| Beispiele | 6 | 7 | 8 |
|---|---|---|---|
| Kaliunhydroxid (g) | 8,4 | - | - |
| Kaliumacetat (g) | - | 14,7 | 29,4 |
| 18-Krone-6 (g) | 39,7 | 39,7 | - |
| Polyethylenglykol ($M_n$ = 370) (g) | - | - | 111 |
| Ethylglykolacetat | 1500 | 1500 | 1500 |
| Konzentration (%) | 60,5 | 59,8 | 60,1 |
| Viskosität hei 23°C (m·Pa.s) | 2300 | 2200 | 2700 |
| Hydroxylzahl (mg KOH/g Lösung) | 92,3 | 93,1 | 90,7 |
| Säurezahl (mg KOH/g Lösung) | 10,9 | 9,4 | 12,5 |
| Farbzahl (Jodfarbskala) | 0 | 0 | 0 |

**Beispiele 9 und 10** (Vergleichsbeispiele)

In diesen Vergleichsbeispielen werden jeweils 25640 g der gemäß Beispielen 6 bis 8 hergestellten ca. 60 %-igen Copolymerisatlösung eingesetzt. Im Falle des Beispiels 9 werden diese 25640 g Lösung bei 140°C mit 8 g Triethylamin und 1500 g Ethylglykolacetat versetzt, im Falle von Beispiel 10 jedoch unkatalysiert gelassen. Anschließend werden jeweils innerhalb von 1 Stunde 3147 g Propylenoxid und 650 g Ethylglykolacetat zudosiert. Anschließend wird jeweils noch während 6 Stunden nachgerührt und schließlich nicht umgesetztes Propylenoxid destillativ entfernt. Die resultierenden Daten sind in der nachfolgenden Tabelle 2 zusammengestellt.

Tabelle 2

| Vergleichsbeispiele | 9 | 10 |
|---|---|---|
| Konzentration (%) | 59,7 | 59,5 |
| Viskosität bei 23°C (m·Pa.s) | 1580 | 4700 |
| Hydroxylzahl (mg KOH/g Lösung) | 90,2 | 71,6 |
| Säurezahl (mg KOH/g Lösung) | 10,7 | 45,1 |
| Farbzahl (Jodfarbskala) | 4 | 0 - 1 |

In den nachstehenden Verwendungsbeispielen 11 - 13 werden folgende Ausgangsmaterialien eingesetzt:

**Polyisocyanat:**

Eine 75 %-ige Lösung eines Biuretgruppen aufweisenden Polyisocyanats in Xylol/Ethylglykolacetat (1 : 1) auf Basis von Hexamethylendiisocyanat. Der Isocyanatgehalt der Lösung beträgt 16,5 %.

**Acrylharze 6 - 8:**

Es handelt sich um die gemäß Beispielen 6 - 8 erhaltenen Lösungen (vgl. Tabelle 1).

Die einzelnen Komponenten werden in solchen Mengen eingesetzt, daß ein NCO/OH-Äquivalentverhältnis von 1 : 1 resultiert.

Die in den nachfolgenden Beispielen beschriebenen Lacke stellten Klarlacke mit einem Feststoffgehalt von ca. 40 Gew.-% dar. Die zusätzliche Verdünnung erfolgte durch Verwendung eines Gemisches von Ethylglykolacetat, Xylol, ®Solvesso 100 und n-Butylacetat (Gew.-Verhältnis 4 : 4 : 1 : 1).

**Beispiel 11**

Verträglichkeit der Acrylharze in Zweikomponentenlacken mit dem Polyisocyanat (Verdünnungsmittel s.o.)

| | | | |
|---|---|---|---|
| Acrylharz | 6 | 7 | 8 |
| Lösung | + | + | + |
| Film | + | + | + |

Kennzeichen der Verträglichkeit
+: einwandfrei verträglich
-: nicht verträglich

**Beispiel 12**

Standzeit und Viskositätsverhalten von Zweikomponentenlacken von Acrylharzen und Polyisocyanat (Verdünnungsmittel s.o.; Zusatz von Aktivator 1,4-Diazabicyclooctan)

| | | | |
|---|---|---|---|
| Acrylharz | 6 | 7 | 8 |
| Standzeit in Stunden | 15 | 14 | 16 |
| Auslaufzeit (DIN 4-Becher) in Sekunden nach | | | |
| 0 Stunden | 15 | 16 | 14 |
| 4 Stunden | 17 | 18 | 15 |
| 8 Stunden | 25 | 29 | 23 |

**Beispiel 13**

Dehnbarkeit und Pendelhärte von Zweikomponentenlacken aus Acrylharz und Polyisocyanat (Zusatz von Aktivator 1,4-Diazabicyclooctan)

| | | | |
|---|---|---|---|
| Acrylharz | 6 | 7 | 8 |
| Erichsen-Tiefung nach DIN 53 156 nach 7 Tagen in mm | 8,7 | 9,2 | 8,9 |
| Pendelhärte nach König in Sekunden nach DIN 53 157 | | | |
| nach 1 Tag | 69 | 65 | 82 |
| nach 7 Tagen | 162 | 147 | 145 |
| nach 14 Tagen | 165 | 161 | 158 |
| Filmschichtdicke (µm) | 50 | 55 | 50 |

**Patentansprüche**

1. Verfahren zur Herstellung von alkoholische Hydroxylgruppen aufweisenden Alkoxylierungsprodukten von organischen Carbonsäuren durch Umsetzung von beliebigen, mindestens eine Carboxylgruppe aufweisenden organischen Verbindungen mit Alkylenoxiden im Sinne einer Alkoxylierungsreaktion in Gegenwart von Katalysatoren, dadurch gekennzeichnet, daß man als Katalysatoren Phasentransferkatalysatoren ausgewählt

aus der Gruppe bestehend aus

a) Kronenether-komplexierten, basischen Alkalimetallverbindungen und

b) Komplexen aus (i) basischen Alkalimetallverbindungen und (ii) acyclischen organischen Verbindungen, die mindestens 5 Alkylenoxideinheiten der Formel -R-O- (R = $C_1$-$C_4$-Alkylen) in Form einer oder mehrerer Polyetherketten mit jeweils mindestens 3 Alkylenoxideinheiten, einen Gehalt an innerhalb mindestens einer Polyetherkette angeordneten Alkylenoxideinheiten der genannten Art von insgesamt mindestens 40 Gew.-% und ein Molekulargewicht von mindestens 238 aufweisen,

in einer Menge von 0,01 bis 2,0 Gew.-%, bezogen auf die Menge der Carboxylgruppen aufweisenden organischen Verbindungen, verwendet, wobei man einer Lösung der Carboxylgruppen aufweisenden organischen Verbindung, welche bereits den Katalysator enthält, das Alkylenoxid zudosiert.

2. Verfahren gemäß Anspruch 1, dadurch gekennzeichnet, daß man als mindestens eine Carboxylgruppe aufweisende organische Verbindungen Copolymerisate mit Säurezahlen von 20 bis 500 und Hydroxylzahlen von 0 bis 130 von Acrylsäure, Methacrylsäure, Maleinsäure bzw. deren Derivaten oder Gemischen derartiger Säuren mit anderen olefinisch ungesättigten Monomeren verwendet.

3. Verfahren gemäß Anspruch 2, dadurch gekennzeichnet, daß man als Copolymerisate der Acrylsäure und/oder Methacrylsäure mit anderen olefinisch ungesättigten Monomeren solche verwendet, in welchen (i)

3 bis 50 Gew.-% Acrylsäure und/oder Methacrylsäure 10 bis 90 Gew.-% Styrol, Methylmethacrylat, Acrylnitril und/oder Methacrylnitril,

5 bis 80 Gew.-% Acrylsäurealkylester mit 1 bis 12 Kohlenstoffatomen im Alkylrest und/oder Methacrylsäurealkylester mit 2 bis 12 Kohlenstoffatomen im Alkylrest und

0 bis 30 Gew.-% Acrylsäure-hydroxyalkylester und/oder Methacrylsäurehydroxyalkylester mit 2 bis 6 Kohlenstoffatomen im Hydroxyalkylrest

in copolymerisierter Form vorliegen, wobei sich die genannten Prozentsätze auf die Gesamtmenge der Copolymerisate beziehen und sich jeweils zu 100 ergänzen, und welche (ii) ein mittleres, nach der Methode der Gelpermeationschromatographie bestimmtes Molekulargewicht von 1000 bis 40. 000 und (iii) eine molekulare Uneinheitlichkeit U von 0,5 bis 3,0 aufweisen.

4. Verfahren gemäß Anspruch 1 bis 3, dadurch gekennzeichnet, daß man die Alkoxylierungsreaktion unter Einhaltung eines Äquivalentverhältnisses von Alkylenoxiden zu Carboxylgruppen von 0,5 : 1 bis 2,0 : 1 bei einer Temperatur von 40° C bis 200° C durchführt.

5. Verfahren gemäß Anspruch 1 bis 4, dadurch gekennzeichnet, daß man als Phasentransferkatalysatoren Kaliumhydroxid, -acetat, -propionat oder -carbonat in mit 1,4,7,10,13,16-Hexaoxacyclooctadecan oder mit acyclischen organischen Verbindungen der in Anspruch 1 genannten Art mit einem Molekulargewicht von 238 bis 3000 komplexierter Form verwendet.

**Claims**

1. A process for the production of alkoxylation products containing alcohlic hydroxyl groups of organic carboxylic acids by reaction of any organic compounds containing at least one carboxyl group with alkylene oxides in an alkoxylation reaction in the presence of catalysts, characterized in that the catalysts used are phase transfer catalysts selected from the group consisting of

a) crown-ether-complexed, basic alkali metal compounds and

b) complexes of (i) basic alkali metal compounds and (ii) acyclic organic compounds containing at least 5 alkylene oxide units of the formula -R-O- (R = $C_1$-$C_4$ alkylene) in the form of one or more polyether chains each containing at least 3 alkylene oxide units and having a content of alkylene oxide units of the type mentioned arranged in at least one polyether chain of in all at least 40 % by weight and a molecular weight of at least 238,

in a quantity of 0.01 to 2.0 % by weight, based on the quantity of organic compounds containing carboxyl groups, the alkylene oxide being added to a solution of the organic compound containing carboxyl groups which already contains the catalyst.

2. A process as claimed in claim 1, characterized in that copolymers having acid values of 20 to 500 and hydroxyl values of 0 to 130 of acrylic acid, methacrylic acid, maleic acid and derivatives thereof or mixtures of such acids with other olefinically unsaturated monomers are used as the organic compounds containing at least one carboxyl group.

3. A process as claimed in claim 2, characterized in that the copolymers of acrylic and/or methacrylic acid with other olefinically unsaturated monomers used are those in which (i)

3 to 50 % by weight acrylic acid and/or methacrylic acid,

10 to 90 % by weirht styrene, methyl methacrylate, acrylonitrile and/or methacrylonitrile,

5 to 80 % by weight alkyl acrylates containing 1 to 12 carbon atoms in the alkyl radical and/or alkyl methacrylates containing 2 to 12 carbon atoms in the alkyl radical and

0 to 30 % by weight hydroxyalkyl acrylates and/or methacrylates containing 2 to 6 carbon atoms in the hydroxyalkyl radical

are present in copolymerized form, the percentages shown being based on the total quantity of polymers and adding up to 100, and which have (ii) an average molecular weight, as determined by gel permeation

chromatography, of 1 000 to 40 000 and (iii) a molecular non-uniformity U of 0.5 to 3.0.

4. A process as claimed in claims 1 to 3, characterized in that the alkoxylation reaction is carried out at an equivalent ratio of alkylene oxides to carboxyl groups of from 0.5 : 1 to 2.0 : 1 and at a temperature of 40 to 200° C.

5. A process as claimed in claims 1 to 4, characterized in that potassium hydroxide, acetate, propionate or carbonate complexed with 1,4,7,10,13,16-hexaoxacyclooctadecane or with acyclic organic compounds of the type mentioned in claim 1 with a molecular weight of from 238 to 3000 are used as the phase transfer catalysts.

**Revendications**

1. Procédé de préparation de produits d'alcoxylation présentant des groupes hydroxyle alcooliques et provenant d'acides carboxyliques organiques par réaction de composés organiques quelconques présentant au moins un groupe carboxyle avec des oxydes d'alkylène au sens d'une réaction d'alcoxylation en présence de catalyseurs, caractérisé en ce que l'on utilise comme catalyseurs des catalyseurs de transfert de phase choisis dans le groupe constitué de

a) les composés basiques de métaux alcalins complexés par les éthers-couronnes et

b) les complexes constitués (i) des composés basiques de métaux alcalins et (ii) des composés organiques acycliques qui comportent au moins 5 unités d'oxyde d'alkylène répondant à la formule -R-O- (R = alkylène en $C_1$-$C_4$) sous forme d'une ou plusieurs chaînes de polyéther avec chaque fois au moins 3 unités d'oxyde d'alkylène, une teneur en unités d'oxyde d'alkylène disposées dans au moins une chaîne de polyéther du type précité d'au moins 40 % en poids au total et un poids moléculaire d'au moins 238,

en une quantité de 0,01 à 2,0 % en poids rapportée à la quantité des composés organiques présentant des groupes carboxyles, l'oxyde d'alkylène étant ajouté en quantité dosée à une solution du composé organique présentant des groupes carboxyle, qui contient déjà le catalyseur.

2. Procédé selon la revendication 1, caractérisé en ce que l'on utilise comme composés organiques présentant au moins un groupe carboxyle des copolymères avec un indice d'acidité de 20 à 500 et un indice d'hydroxyle de 0 à 130, provenant de l'acide acrylique, de l'acide méthacrylique, de l'acide maléique ou de leurs dérivés, ou de mélanges de ces acides avec d'autres monomères à insaturation oléfinique.

3. Procédé selon la revendication 2, caractérisé en ce que l'on utilise comme copolymère de l'acide acrylique et/ou de l'acide méthacrylique avec d'autres monomères à insaturation oléfinique, ceux dans lesquels (i) 3 à 50 % en poids d'acide acrylique et/ou d'acide méthacrylique, 10 à 90 % en poids de styrène, de méthacrylate de méthyle, d'acrylonitrile et/ou deméthacrylonitrile,

5 à 80 % en poids d'ester alkylique de l'acide acrylique avec 1 à 12 atomes de carbone dans le radical alkyle et/ou d'ester alkylique de l'acide méthacrylique avec 2 à 12 atomes de carbone dans le radical alkyle et

0 à 30 % en poids d'ester hydroxyalkylique de l'acide acrylique et/ou d'ester hydroxyalkylique de l'acide méthacrylique avec 2 à 6 atomes de carbone dans le radical hydroxyalkyle se trouvent sous forme copolymérisée, les pourcentages indiqués se rapportant à la quantité totale de copolymères et faisant chaque fois un total de 100 et qui (ii) présentent un poids moléculaire,déterminé par la méthode de chromatographie à perméation de gel, de 1 000 à 40 000 et (iii) une irrégularité de poids moléculaire "U" de 0,5 à 3,0.

4. Procédé selon les revendications 1 à 3, caractérisé en ce que l'on réalise la réaction d'alcoxylation en maintenant un rapport des équivalents entre les oxydes d'alkylène et les groupes carboxyle de 0,5 : 1 à 2,0 : 1 à une température de 40 à 200° C.

5. Procédé selon les revendications 1 à 4, caractérisé en ce que l'on utilise comme catalyseurs de transfert de phase, de l'hydroxyde, de l'acétate, du propionate ou du carbonate de potassium avec du 1,4,7,10,13,16-hexaoxacyclooctadécane ou avec des composés organiques acycliques du type mentionné à la revendication 1 et avec un poids moléculaire de 238 à 3000 à l'état complexé.